# EUROPEAN PATENT APPLICATION

(11) **EP 4 116 093 A1**
(43) Date of publication of application: **11.01.2023**
(21) Application number: 21184766.0
(22) Date of filing: 09.07.2021
(51) Int. Cl.: B32B 27/18, B32B 27/32

(54) **SUSTAINABLE MULTILAYER FILM COMPRISING RECYCLED POLYETHYLENE USEFUL IN FOOD PACKAGING**

(71) Applicant: Trioworld Landskrona AB, 261 23 Landskrona (SE)
(72) Inventor: Fröhberg, Charlotte, 253 41 Vallåkra (SE); Svenningsson, Catharina, 254 78 Domsten (SE); Geidenmark Olofsson, Kristin, 274 91 Skurup (SE); Broström, Stefan, 252 70 Råå (SE)
(74) Representative: AWA Sweden AB

(57) **Abstract**

A multilayer film comprises a core layer arranged between a first outer layer and a second outer layer. The core layer comprises polyethylene and at least one migratory substance. The first outer layer and the second outer layer each comprises polyethylene. At least one of the first and second outer layers comprises a barrier additive to prevent or reduce migration of the at least one migratory substance from the core layer, which may contain recycled polyethylene.

## Description

### FIELD OF THE INVENTION

The present disclosure relates to a multilayer film comprising polyethylene and a barrier additive, to a method for manufacturing such film, and to use of the film for packaging, in particular food packaging.

### BACKGROUND

With increasing environmentally awareness, the interest in plastics derived from reusable resources is on a high level and still growing. Also, the interest in recycled plastics, including post-consumer recycled (PCR) plastics, is large for the same reasons. Recycling processes are continuously improved, and PCR can today be used in many different applications, such as packaging, to mention one. A drawback of using PCR material, however, is that it may contains impurities in the form of substances that may be prone to migrate out of the plastic and into adjacent materials. The usefulness of PCR plastics, and low quality plastics in general, which may contain such unwanted migratory substances has therefore heretoforth been limited. The amount and presence of impurities in material intended for packaging, in particular food packaging, is restricted, e.g. under Regulation (EU) 10/2011 - safety requirements for plastic materials and articles intended to come into contact with food.

A way to reduce the amounts of unwanted migratory substances in recycled plastics is to use a chemical recycling process which, as the names implies, employs chemicals to purify the plastics. Chemical recycling provides cleaner PCR plastics than mechanical recycling, which by mechanical means provides PCR with higher amounts of impurities than the former. However, mechanical recycling is less harmful for the environment and therefore preferred from that perspective.

One widely used thermoplastics in food contact applications is polyethylene terephthalate (PET). A packaging structure based on post-consumer PET resin is disclosed in US2020023622AA.

DE202010004849 discloses another multilayer structure for food packaging. The structure comprises at least one layer (A) of recycled resin, a layer (B) mainly of polyolefin resin, and two or more barrier layers composed of ethylene-vinyl alcohol (EVOH) copolymer resin arranged on either side of the recycled resin layer A. However, with different polyolefins present, the film is not easily recycled.

Hence, there exists a large need for more sustainable packaging materials, and methods of increasing the use of recycled plastics for various applications.

### SUMMARY

The present inventive concept seeks to provide a multilayer film which is has low environmental footprint. The present inventive concept also seeks to provide a multilayer film which can make use of raw materials of a range of qualities.

An object of the inventive concept is to mitigate the above problems, and to provide a multilayer film which may contain polyethylene of relatively low quality, which still can be safely used even for contact with food. A further object is to provide such a multilayer film which is manufactured with less environmental impact than prior art solutions. These, and other objects which will become apparent in the following, are accomplished by means of a multilayer film as defined in the accompanying claims.

According to a first aspect of the invention, the above objects are achieved by a multilayer film comprising a core layer arranged between a first outer layer and a second outer layer, the core layer comprising polyethylene (PE) and at least one migratory substance, wherein the first outer layer and the second outer layer each comprises polyethylene (PE), preferably virgin polyethylene, and wherein at least one of the first and second outer layers, preferably both, comprises a barrier additive to prevent or reduce migration of the at least one migratory substance from the core layer.

It was surprisingly found that polyethylene with relatively high amounts of impurities or contaminants may still be used in a multilayer film when a layer of such polyethylene is sandwiched between two outer layers of higher quality polyethylene, and wherein at least one of the outer layers comprises a barrier additive. The outer layer, with the barrier additive present, provides a barrier and may thus prevent any migratory substance present in the middle, or core, layer, to migrate out of the film and into an adjacent material, such as a packaged article. The outer layer(s) can thus form a barrier against such migratory substances, allowing low quality or contaminated PE to be used for various applications than would be possible without the barrier additive present. Thereby, also polyethylene that contains certain amounts of undesirable impurities, such as is often the case with recycled polyethylene, can be safely used for packaging various items, including food. The multilayer film may therefore be used for food packaging. Hence, the inventive concept enables use of recycled polyethylene material to a higher extent than before.

The recycled material used in the film of the invention may be selected from post-consumer recycled polyethylene ("PCR-PE") and post-industrial recycled polyethylene ("PIR-PE"), and combinations thereof.

As used herein, post-industrial recycled ("PIR") PE refers to plastic waste recovered from industrial processes and consists of recycled polyethylene (or blends comprising recycled polyethylene) stemming from industrial waste. In contrast to PCR, PIR is recycled plastic that has not been used for the intended purpose. PIR-PE material useful in the present film may originate from production of polyethylene films for various purposes, such as stretch films, films for bags, pouches and other types of packaging. The films may be intended for use other than food contact. The material may in particular be recovered waste from edge trims, product changeovers, products scrapped due to quality defects, rolls ends, cut-offs, i.e. design waste e.g. cutting sections for carrier bag making with handles. Depending on the intended use of the products from which it is obtained, PIR-PE may contain substances that are not desirable or permitted in films for food contact. For example, PIR may contain relatively high amounts of pigments, dyes and/or UV stabilizers. Consequently, PIR materials may have a relatively high content of antioxidants. The PIR-PE material may in addition to polyethylene also contain small amounts of other polymers, such as EVA and/or other polyolefins such as polypropylene. Preferably however, the base polymer of the PIR-PE is mainly or exclusively polyethylene.

As used herein, the term "PCR-PE" refers to PCR-PE polyethylene material that has been previously incorporated into one or more products, used, and then collected and processed in a recycling process, preferably in a mechanical recycling process and not by chemical recycling. PCR-PE may thus be recycled materials, such as from flexible film polyethylene, in particular recycled packaging films or stretch wrap. The PCR waste polyethylene material may originate from a resin of recycled polyethylene products. Preferably, the PCR-PE derives from polyethylene that has been processed in a mechanical recycling process.

The multilayer film does not contain layers of non-polymeric material, such as metal, paper, etc. The multilayer film typically contains no polymers other than polyolefins. Furthermore, the film preferably comprises no polyolefins other than polyethylene. The film may hereby be recycled more easily.

As used herein, the term "migratory substance" refers to any chemical compound, or contaminant, that is present in the core layer and that migrates from the core layer to the outer layers and may be further transferred into a an adjacent material. Migratory substances are primarily of concern when they are hazardous and/or their presence in a plastic material such as a packaging is regulated under chemicals legislation, such as the Regulation (EU) 10/2011 on safety requirements for plastic materials and articles intended to come into contact with food. The migratory substance may, for example, comprise a substance selected from the list consisting of antimony, cobalt, europium, lanthanum, nickel, terbium, and salts and derivatives thereof, and compounds containing these elements. Further examples include phenol, 2,4-bis(1,1-dimethylethyl)-phosphite, tris(2,4-di-tert-butylphenyl) phosphate, benzenepropanoic acid, 3,5-bis(1,1-dimethylethyl)-4-hydroxy-octadecyl ester, 13-Docosenamide, (Z)- and cis-11-Eicosenamide.

It should be noted though that the barrier effect resulting from the presence of the outer layers may depend on the base material being present in the core layer and what type of outer stimuli are affecting the film. The barrier effect may also depend on what type and content of migratory substance that are present in the core layer. The inventive concept allows the core layer to completely consist of PCR-PE. Alternatively, the multilayer film may have a content of PCR-PE, in the core layer, in the range of 50-100 %, such as 60-80 % by weight based on the total weight of the core layer.

The barrier additive may be selected from the group consisting of mica, talc, cyclic olefin copolymer (COC), zeolite, and combinations thereof. Each of these barrier additives were found to reduce migration of one or more undesirable migratory substances.

The content of the barrier additive present in the multilayer film may either be calculated based on the weight of the film in total or on the weight of the layer in which the barrier additive is present. As different barrier additives provide different barrier effects the ranges of barrier additives can vary from case to case. The content of the barrier additive in the multilayer film may, for example, be in the range of 2-70 %, such as 5-70 %, such as 10-70 %, such as 10-60 %, such as 20-60 %, such as 15-20 % or 30-50 % by weight based on the weight of the first or second outer layer, respectively, in which the barrier additive is present. For instance, the content of COC may be in the range of 40-70 % by weight based on the weight of the respective layer. Based on the total weight of the multilayer film, the content of the barrier additive may be in the range of 2-30 % such as 3-20 % or 4-10 % by weight. For instance, the content of COC, when present, may be in the range of from 10 to 30 % by weight of the total film, such as from 15 to 30 % by weight of the total film.

The PCR-PE used in embodiments of the present invention is not limited to any particular type of polyethylene. The PCR-PE may contain any one of high density polyethylene, medium density polyethylene, low density polyethylene, and linear low density polyethylene, or combinations thereof. The ratio of LDPE to LLDPE in the PCR-PE may for example be in the range of 50:50 to 90:10, such as from 60:40 to 80:20, such as about 70:30.

The multilayer film may be for instance a three-layer film, or a five-layer film. In case of the five-layer film, the multilayer film comprises a third outer layer located outside the first outer layer, and a fourth outer layer located outside the second outer layer. Hereby, the first outer layer is sandwiched between the core layer and the third outer layer, and the second outer layer is sandwiched between the core layer and the fourth outer layer. To further to prevent or reduce migration of the migratory substance from the core layer, at least one of the third and fourth outer layers may comprise a second barrier additive. A five-layer film may thus have improved barrier properties compared to a three-layer film. Moreover, a five-layer film may have improved surface properties, such as improved lamination properties and/or improved heat-sealing properties.

The second barrier additive may be selected from the group consisting of mica, talc, cyclic olefin copolymer, zeolite, and combinations thereof. The second barrier additive present in the at least one of the third and fourth outer layers may thus be the same as the barrier additive present in at least one of the first and second outer layers. Preferably, however, the second barrier additive is different from the first barrier additive present in at least one of the first and second outer layers. An advantage of using different barrier additives in the first and/or second outer layers, and the third and/or fourth outer layers is that a combination of different barrier additives may improve the barrier effect with respect to more than one migratory substances. A combination of different barrier additives may for example improve the barrier properties against a plurality of migratory substances present in the core layer.

At least one of the first and second barrier additives is preferably cyclic olefin copolymer. An example of an embodiment with COC present is a film wherein the first barrier additive is talc and the second barrier additive is COC, or vice versa. Alternatively, the first barrier additive may be COC and the second barrier additive may be one of mica and zeolite, or vice versa. Other combinations are also conceivable, such as a film wherein the first barrier additive is zeolite and the second barrier additive is mica, or vice versa.

In another aspect, the invention provides a laminated product comprising a multilayer film according to the inventive concept and a polyethylene base film.

In yet another aspect, the invention provides a packaging comprising a multilayer film according to the inventive concept or the laminate described above. The additive mentioned above, which may be selected from mica, talc, cyclic olefin copolymer, zeolite, and combinations thereof, may thus be used for preventing migration of a migratory substance present in a packaging film, the film preferably comprising post-consumer recycled polyethylene.

In a further aspect, a method for manufacturing a multilayer film is provided. The method comprises the steps of:
- extruding a first extrudable resin composition to form first outer layer;
- extruding a second extrudable resin to form second outer layer; and
- extruding a third extrudable resin composition comprising polyethylene (PE) and a at least one migratory substance to form a core layer, the third extrudable resin preferably comprising post-consumer recycled polyethylene;
wherein at least one of the first and second extrudable resin compositions comprises a barrier additive, preferably selected from the group consisting of mica, talc, cyclic olefin copolymer, zeolite, and combinations thereof, to prevent or reduce migration of the at least one migratory substance from the core layer;
wherein the first outer layer, the second outer layer and the core layer are coextruded, whereby a multilayer film is formed with the core layer arranged between the first outer layer and the second outer layer.

The method above allows the third extrudable composition to comprise post-consumer recycled polyethylene material that has previously been incorporated into one or more products and collected and processed in a recycling process, preferably a mechanical recycling process.

It is noted that the invention relates to all possible combinations of features recited in the claims. Generally, all terms used in the claims are to be interpreted according to their ordinary meaning in the technical field, unless explicitly defined otherwise herein. In the claims, the word "comprising" does not exclude other elements or steps, and the indefinite article "a" or "an" does not exclude a plurality. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

The mere fact that certain measures are recited in mutually different dependent claims does not indicate that a combination of these measured cannot be used to advantage.

### BRIEF DESCRIPTION OF THE DRAWINGS

The disclosure will be described in more detail with reference to the appended schematic drawings, which show an example of a presently preferred embodiment of the disclosure.
Fig. 1a shows a multilayer film according to an embodiment of the invention, having an ABA structure. Fig. 1b shows a multilayer film according to an embodiment of the invention, having an ABA' structure. Fig. 1c shows a multilayer film according to an embodiment of the invention, having an ABA" structure.
Fig. 2 shows a five-layer according to an embodiment of the invention.
Fig. 3 shows a laminate according to an embodiment of the invention.
Fig. 4 shows a method for manufacturing a multilayer film according to an embodiment of the invention.

### DETAILED DESCRIPTION

The present disclosure will now be described more fully hereinafter with reference to the accompanying drawings, in which currently preferred embodiments of the disclosure are shown. The present disclosure may, however, be embodied in many different forms and should not be construed as limited to the embodiments set forth herein; rather, these embodiments are provided for thoroughness and completeness, and to fully convey the scope of the disclosure to the skilled addressee. Like reference characters refer to like elements throughout.

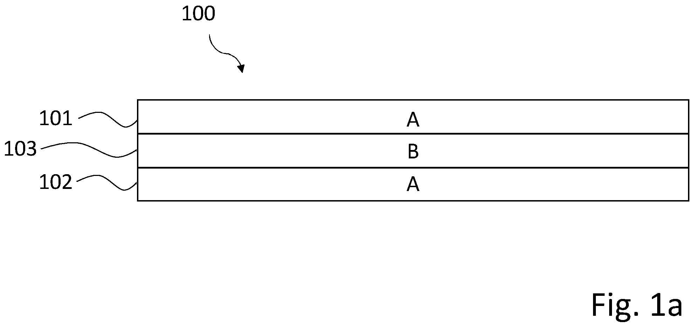

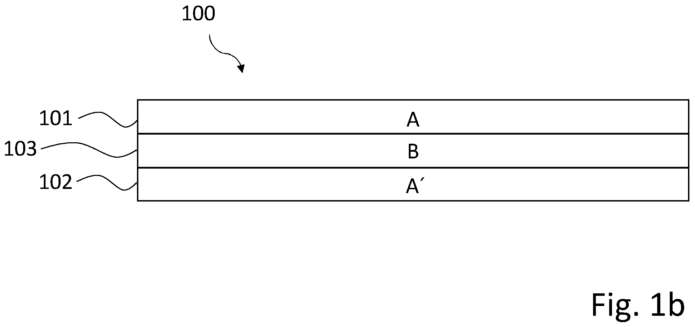

Fig. 1a - c show examples of a multilayer film 100 according to embodiments of the invention. The film 100 comprises a first outer layer 101 and a second outer layer 102, which form the exterior surface of the film 100. The first outer layer 101 and the second outer layer 102 are referred to as layer A, A' or A". Sandwiched between the outer layers 101, 102 is a core layer 103, referred to as layer B. The multilayer film 100 in Fig. 1a, is a three-layer film and may be referred to as an ABA film. However, as will be explained with reference to Fig. 1b, it is also conceivable that the multilayer film of the invention is not symmetrical, but that the outer layers 101,102 differ with respect to e.g. composition, or thickness. Hence, the film 100 may also be a referred to as ABA'.

In embodiments, all layers may be based on polyolefins, in particular polyethylene. In embodiments, the core layer 103 and each of the outer layers may essentially consist of polyethylene as base material. In embodiments, the polyolefin content of the core layer 103 and the first and second outer layers 101, 102 may be exclusively polyethylene. Hereby, the film 100 typically does not contain non-polymeric materials, such as metals or paper, nor polymers other than polyolefins, such as polyamide, polyesters, and ethylene vinyl alcohol (EVOH). In particular, the film 100 may be free of polyethylene terephthalate (PET). The film 100 may also be free of polypropylene (PP). Further, the film 100 may be free of cellulose.

The film 100 may have a thickness from 50-90 µm, such as from 60-80 µm or 70-75 µm. The thickness of the core layer 103 may be from 20-50 µm, such as 30-40 µm. The thickness of the first and second outer layer may be from 20-50 µm, such as 5-30 µm or 10-20 µm.

The core layer 103 may constitute from 40-70 %, and preferably 50-60 % of the total film thickness. Each of the first and second outer layers 101, 102 may constitute from 10-30 %, such as 15-20 %, of the total film thickness.

The average density of the film 100 may typically be from 900-950 kg/m³, such as 920-940 kg/m³. These ranges likewise apply for each of the individual layers. Hereby, the average density of the core layer 103 may be from 900-950 kg/m³, such as 920-940 kg/m³, and the average density of each of the first and second outer layer may be from 900-950 kg/m³, such as 920-940 kg/m³.

The core layer 103 is based on PE and may comprise virgin PE, such as virgin LLDPE, virgin LDPE and/or virgin HDPE. The virgin LDPE may be metallocene based PE. The core layer may comprise virgin PE at a content of up to 30 %, such as from more than 0 % to 20 %, such as from 15 to 20 % by weight based on the weight of said core layer. The content of virgin LLDPE, LDPE and HDPE, respectively, may be from 10 to 30 % by weight of the layer, such as from 15 % to 20 %. Hereby, the core layer may comprise virgin high-density polyethylene (HDPE) at a content in the range of 10-30 %, such as 15-20 %, by weight based on the weight of said core layer. The core layer may also comprise virgin linear low-density polyethylene (LLDPE) and/or low-density polyethylene (LDPE) at a content in the range of 10-30 %, such as 15-20 %, by weight based on the weight of said core layer.

The core layer 103 may comprise recycled polyethylene, such as PCR or PIR, and combinations thereof.

The material in the core layer 103 may be a combination of virgin PE and recycled PE. Advantageously, the core layer 103 may comprise a substantial amount of PCR-PE, even up to 100 %. The PCR-PE may thus comprise one or more of the following: linear low-density polyethylene (LLDPE), low-density polyethylene (LDPE), medium-density polyethylene (MDPE), and high-density polyethylene (HDPE), in particular linear low-density polyethylene (LLDPE) and/or low-density polyethylene (LDPE).

In embodiments, the content of HDPE in the recycled PE may be at most 10 % by weight, the remaining polymer content being essentially LLDPE and/or LDPE. Hence, the PCR-PE may comprise high-density polyethylene (HDPE) at a content of less than 10 % by weight based on the total weight of the recycled PE.

When the PCR-PE consists of a combination of LDPE and LLDPE, the ratio between the two of them (LDPE to LLDPE) is preferably in favour of LDPE. For example, the ratio of LDPE to LLDPE may be from 50:50 to 90:10, such as 60:40 to 80:20, or 70:30.

The density of the recycled PE of the core layer may be in the range of 915-945 kg/m³, 920-940 kg/m³, and preferably 923-925 kg/m³. This range allows different types of polyethylene to be present in the core layer 103, as mentioned above.

The PCR-PE may comprise polyethylene material that has been previously incorporated into one or more products, used, and then collected and processed in a recycling process, preferably in a mechanical recycling process. PCR-PE may thus be recycled materials, such as from flexible film polyethylene, in particular recycled transport films. The PCR waste polyethylene material may thus originate from a resin of recycled polyethylene products. Examples of recycling processes are chemical recycling and mechanical recycling.

Preferably, the PCR-PE derive from polyethylene that has been processed in a mechanical recycling process. A typical mechanical recycling process includes shredding, washing, filtration (optional), melting, and extrusion to pellets. The mechanical recycling process often results in PCR-PE with a higher degree of impurities than the chemical recycling process and the suitability of PCR-PE derived from mechanical recycling for various applications may therefore be limited. However, mechanical recycling is a more environmentally friendly alternative than chemical recycling. An advantage with the present inventive concept is therefore that mechanical recycled PCR-PE may be utilized in a wider application area than previously.

Non-limiting examples of impurities that may be present in polyethylene material include cellulosic fibres, dirt/dust, decomposed organic matter such as humus, polyamide materials and ethyl vinyl alcohol materials, and other polymers having a density outside the range of 0.890-0.980 g/cm³. Other examples of impurities that may be present in polyethylene material include residues and degradation products of adhesives, print and antioxidants. Some of these impurities may be prone to migration and are herein referred to as migratory substances. Non-limiting examples of such migratory substances are phenol, 2,4-bis(1,1-dimethylethyl)phosphite, tris(2,4-di-tert-butylphenyl)phosphate, benzenepropanoic acid, 3,5-bis(1,1-dimethylethyl)-4-hydroxy-octadecyl ester, 13-docosenamide, (Z)- and cis-11-eicosenamide.

The content of the recycled polyethylene in the core layer 103 may be in the range of 20 % to 80 %, such as 30 to 50 %, by weight based on the total weight of the multilayer film 100. Alternatively, the core layer 103 may comprise recycled PE at a content from 50 to 100 %, such as from 60 to 80 %, by weight based on the weight of the film 100. The core layer may exclusively consist of PCR-PE.

The melt flow index of the PCR-PE may be in the range of 0.4-1.2 g/10 min. (measured at 190°C, 2.16 kg).

Each of the first and second outer layers 101, 102 comprises virgin PE. The virgin PE present in the outer layers may comprise virgin LLDPE, LDPE and/or HDPE, in particular virgin LLDPE and/or LDPE. The outer layers may thus especially comprise LLDPE or LDPE. For example, the first and/or second outer layers 101 may comprise linear low density polyethylene, such as virgin metallocene LLDPE (mLLDPE) and/or Ziegler Natta-catalyzed LLDPE. Each of the first and second outer layers 101, 102 may further comprise polyolefin elastomer (POE).

The virgin PE present in at least one of the outer layer may be qualified as food grade plastic. Regulation (EU) 10/2011 sets out safety requirements for plastic materials and articles intended to come into contact with food. Hence, the virgin PE used in the present film, especially in the outer layers, may comply with Regulation (EU) 10/2011.

At least one, and optionally both, of the first and second outer layers 101, 102 comprises a barrier additive to prevent or reduce migration of at least one migratory substance from the core layer 103. One or both of the outer layer thus function as a barrier against migratory substances present in the core layer 103. Non-limiting examples of barrier additives are mica, talc, cyclic olefin copolymer, zeolite, and combinations thereof.

The talc particles may have the form of flakes. The talc particles may be characterized by a mean particle size (D50) from 3.8 to 4.5 µm, such as 4.0 to 4.3 µm, and preferably 4.2 µm. A talc additive may be added during manufacture in the form of a masterbatch containing talc and a polyethylene carrier.

The mica used in embodiments of the invention may be in the form of rods, flakes or particulates. A mica additive may be added during manufacture in the form of a masterbatch containing talc and a polyethylene carrier.

The zeolite used in embodiments of the invention may be in the form of particles. A zeolite additive may be added during manufacture in the form of a masterbatch containing zeolite particles and a polyethylene carrier.

Cyclic olefin copolymer as used in the present invention is an amorphous olefinic resin of high purity, good chemical resistance, and high moisture barrier properties. It is typically added to the film resin in pure form, that is, not in the form of a masterbatch based on polyethylene. The glass transition temperatures of COC may be in the range of 70-180 °C. The density of COC may be in the range of 0.95-1.10 g/cm³, such as 1.0-1.05 g/cm³.

The content of the barrier additive may be from 2 to 70 % by weight, such as 5 to 70 %, 10 to 70 %, 10 to 60 %, 15 to 20 % or 30 to 50 % based on the weight of the first or second outer layer, respectively, in which the barrier additive is present. Alternatively, the content of the barrier additive may be in the range of 2 to 30 %, such as 3 to 20 %, or 4 to 10 % by weight, based on the total weight of the multilayer film.

The content of COC may be in the range of 5 to 30 %, such as 10 to 25 %, or 15 to 20 % by weight, based on the total weight of the multilayer film.

The content of mica may be in the range of 0.5 to 2 %, such as from 0.75 to 1.5 %, or from 1 to 1.25 % by weight, based on the total weight of the multilayer film.

The content of zeolite may be in the range of 0.2 to 1 %, such as 0.5 to 0.8 % by weight, based on the total weight of the multilayer film.

The content of talc may be in the range of 2 to 6 %, such as 3 to 5 %, or 4 % by weight, based on the total weight of the multilayer film.

The polyolefin content of at least one of the outer layers may be exclusively virgin PE. Optionally, at least one of the outer layers is free of recycled post-consumer waste polyethylene material. Optionally, both outer layers are free of PCR material. In this context, "free of" means that no PCR material is contained in said layer, by the fact that no PCR material is added to the melt extruded by the extruder in question during production of the film 100.

As mentioned above, both of the first outer layer 101 and the second outer layer 102 may comprise the barrier additive. In such embodiments, the first and second outer layers 101, 102 may have identical or different composition depending on the type and content of barrier additive(s) as well as type and content of virgin PE.

Fig. 1a illustrates a film 100 in which the first and second outer layers 101, 102 have identical composition. The type and content of the barrier additive present in the first outer layer 101 is the same as the type and content of the barrier additive present in the first outer layer 102. Likewise, the type and content of virgin PE in the first outer layer 101 is the same as the type and content of virgin PE present in the first outer layer 102.

Alternatively, both the first and second outer layers 101, 102 comprise a barrier additive although the composition of the first and second outer layers 101, 102 differ from each other. Such an example is illustrated in Fig. 1b. For example, the type and/or content of virgin PE in the first outer layer 101 may differ from the type and/or content of the virgin PE in the first outer layer 102. The type and/or content of barrier additive in the first outer layer 101 may also differ from the type and/or content of barrier additive present in the second outer layer 102. In such embodiments, the first and second outer layers 101, 102 have different composition, even though both outer layers comprise a barrier additive.

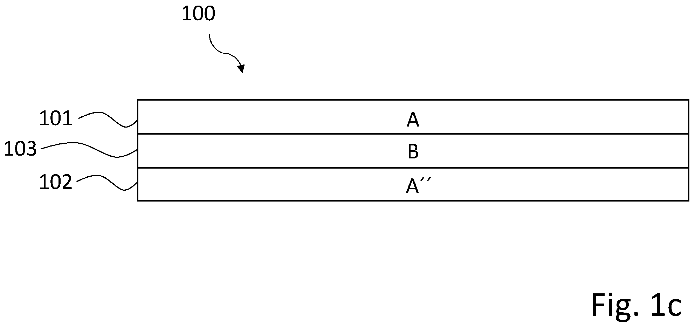

In yet another embodiment, which is illustrated in Fig. 1c, the first and second outer layer have different composition and only one of the first and second outer layers 101, 102 comprises a barrier additive. In such embodiments, the type of virgin PE in the first outer layer 101 may be the same as the type of virgin PE present in the second outer layer, although the content differs. Alternatively, the type of virgin PE in the first outer layer 101 differs from the type of virgin PE in the second outer layer 102.

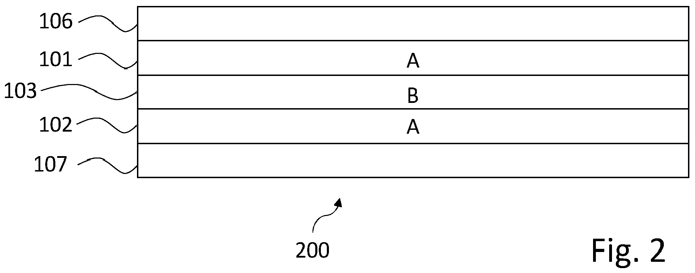

Fig. 2 shows an example of a multilayer film 200 according to embodiments of the invention. In this case, the multilayer film is a five-layer film. Similar to the three-layer film 100 in Fig. 1a-c, the five-layer film 200 has a core layer 103 and a first and second outer layer provided on each side of the core layer 103. The description of the three layer film 100 and its composition, as described above, therefore also applies to the five-layer film 200.

In addition to the core layer 103 and the first and second outer layers 101, 102, the five-layer film 100 has a third and fourth outer layer provided on each side of the first and second outer layers 101, 102. The core layer 103 is thus sandwiched between the first and second outer layers 101, 102. The first outer layer 101 is sandwiched between and the core layer 103 and the third outer layer 106 and the second outer layer 102 is sandwiched between the core layer 103 and the fourth outer layer 107. The outermost layers 106, 107 may optionally be referred to as skin layers.

Either one or both of the third and fourth outer layers 106, 107 may also comprise a barrier additive, here referred to as a second barrier additive. The third and/or the fourth outer layers 106, 107 may thus form extra barrier layer against migratory substances present in the core layer 103. The second barrier additive may be the same as the barrier additive present in the first and/or second outer layers 101, 102, here referred to as the first barrier additive. Alternatively, the second barrier additive may be a different type of barrier additive than the first barrier additive.

In one embodiment, the barrier additive present in at least one of the first and second outer layer 101, 102 is a first barrier additive and at least one of the third and fourth outer layer 106, 107 comprises a second barrier additive, wherein the second barrier additive is different from the first barrier additive.

The barrier additives described in relation to the three layer film 100 are applicable also in the five-layer film 200 and therefore not repeated here.

These barrier additives are applicable in any one of the first, second, third and/or fourth outer layers 101, 102, 106, 107. In other words, each of the above-described barrier additives are applicable as either the first barrier additives and/or second barrier additive. To mention one example, COC is applicable as either one of the first and the second barrier additive.

In embodiments where the first and second barrier additive are of different type, different combinations of barrier additives are conceivable. For example, the first barrier additive may be zeolite and the second barrier additive may be talc, or vice versa. Alternatively, the first barrier additive may be COC and the second barrier additive may be mica, or vice versa.

The following combinations may also be used: the first additive is talc and the second barrier additive is COC, or vice versa; the first barrier additive is zeolite and the second barrier additive is mica, or vice versa.

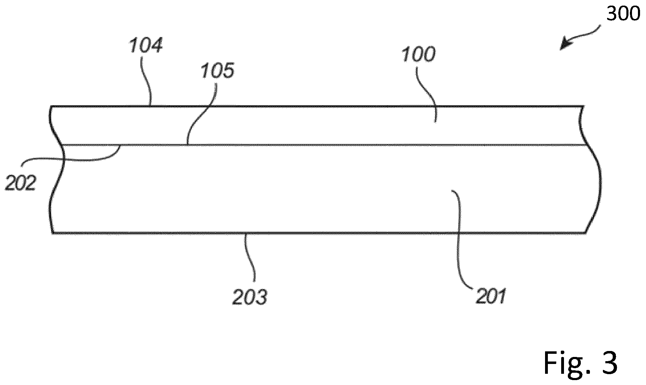

Fig. 3 illustrates a laminate 300 according to embodiments of the invention, comprising a polyethylene base film 201 having a first surface 202 and a second surface 203. When used for packaging applications, surface 203 is intended to face the interior of the packaging, i.e. the product packaged, and surface 202 is intended to face towards the exterior. A multilayer film as described herein can be attached, for instance by heat lamination, hot melt glue lamination, ultrasound high frequency bonding, or two-component glue, to the surface 202 of the base film 201. In Fig. 3, the multilayer film 100 is arranged such that the surface 105 faces surface 105 of the base film 201, although it is envisaged that in other embodiments the film 100 may be arranged with the opposite side, surface 104, facing the base film 201. The desired orientation of the multilayer film 100 would depend on the properties of the respective outer layers 101, 102, as appreciated by a person of skill in the art. For instance, where only one of the outer layers 101, 102 contain a barrier additive, such layer would be arranged to face away from the base film 201.

The base film 201 of the laminate 300 is typically a polyethylene film. The base film may optionally be a multilayer film. The base film 201 is adapted for or suited for lamination and typically has good properties for welding, such as high hot tack, and/or allows welding at low temperature.

A laminate 300 may be manufactured by a method comprising: providing a polyethylene base film having a first surface and a second surface; providing the multilayer film 100 according to the inventive concept, and laminating the multilayer film 100 to the first surface of the polyethylene base film. Optionally a print may be provided on the base film prior to lamination.

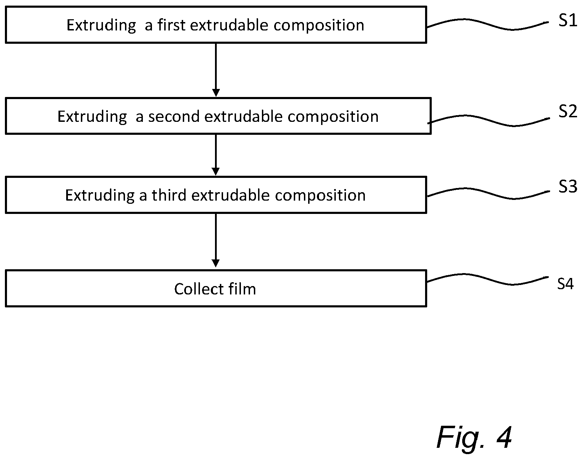

Fig. 4 schematically illustrates a method for manufacturing a multilayer film 100 according to the invention. The method comprises the steps of:
- extruding (S1) a first extrudable resin composition to form first outer layer 101;
- extruding (S2) a second extrudable resin to form second outer layer 101; and
- extruding (S3) a third extrudable resin composition to form a multilayer film 100 with the core layer 103 arranged between the first outer layer 101 and the second outer layer 101.

The third extrudable composition may comprise polyethylene (PE) and a at least one migratory substance. Preferably, the third extrudable resin comprises post-consumer recycled polyethylene. At least one of the first and second extrudable resin compositions comprises a barrier additive, preferably selected from the group consisting of mica, talc, cyclic olefin copolymer, zeolite, and combinations thereof, to prevent or reduce migration of the at least one migratory substance from the core layer 103. The first outer layer 101, the second outer layer 101 and the core layer 103 may be coextruded. The third extrudable composition may comprise recycled polyethylene material. For instance it may contain post-consumer recycled polyethylene material that has previously been incorporated into one or more products and collected and processed in a recycling process, preferably a mechanical recycling process.

In the case of a multilayer film containing more than three layers, further extrudable composition are provided to form the additional layers, such as a third outer layer and a fourth outer layer, as described herein.

The film may be manufactured by blow extrusion. Alternatively, the film may be manufactured by cast extrusion. Thus, the multilayer film may be either blown or cast. A blown film has been melted and thereafter air-cooled when blown out. A cast film has been cooled over cooling rollers. The melt flow index of a blown film may be in the range of 0.2-1.5 g/10 min (measured at 190°C, 2.16 kg). A cast film may have a melt flow index above 1 g/10 min (measured at 190°C, 2.16 kg).

The multilayer film is preferably co-extruded, according to known methods in the art. For example, a multilayer film according to the invention may be produced by coextrusion of from three extruders, each designated to extrude an extrudable composition that is to form one of the layers. The extruders may extrude different compositions, or at least some of the extruders may extrude the same composition. In embodiments, there may be more extruders. For instance, where the film should comprise five layers, five extruders are typically used to coextrude five extrudable resin compositions, e.g. to form layers 101, 102, 103, 106, 107 as described above with reference to Fig. 2.

The multilayer film of the invention is useful for preventing migration of migratory substances. In particular the film may be used to prevent migration of a substance selected from the group consisting of: phenol, 2,4-bis(1,1-dimethylethyl)-phosphite, tris(2,4-di-tert-butylphenyl) phosphate, benzenepropanoic acid, 3,5-bis(1,1-dimethylethyl)-4-hydroxy-octadecyl ester, 13-Docosenamide, (Z)- and cis-11-Eicosenamide.

Furthermore, the film of the invention may be used as a packaging, in particular as a food packaging. The multilayer film may further be used in a laminate product, a pouch, or a bag, such as a fill-form-seal bag. An application of the multilayer film is a bag or pouch comprising a multilayer film according to the inventive concept or a laminate according to the inventive concept. Another application is a bag or pouch according to the inventive concept which bag or pouch is a fill-form-seal bag.

### Examples

Exemplary multilayer films according to embodiments of the invention were produced by blown film coextrusion based primarily on linear low density polyethylene (LLDPE) and post-consumer recycled polyethylene (PCR-PE). Example films 1-4 had three layers each and Example films 5 and 6 had five layers each. The film compositions were as follows:

### Film 1 (mica)

Film 1 had outer layers each containing 92 % of virgin LLDPE (density of 918 kg/m³), 6 % of mica masterbatch containing 30 % mica particles (Mica N, Aspanger, Germany), and 1 % each of conventional processing aid and antiblock additives. The core layer contained 85 % of PCR-PE (density 925 kg/m³, melt flow rate 0.5-1.0 g/10 min at 190°C/2.16 kg, LDPE:LLDPE ratio 70:30) and 15 % virgin HDPE (density 960 kg/m³). The core layer formed 60 % of the film, and the outer layers formed 20 % each. The film had a total density of 926 kg/m³.

### Film 2 (zeolite)

Film 2 had outer layers each containing 88 % of virgin LLDPE (density of 918 kg/m³), 10 % zeolite masterbatch containing 20 % Zeoflair (ZEOflair 350, ZEOCHEM), and 1 % each of conventional processing aid and antiblock additives. The core layer contained 85 % of PCR-PE (density 925 kg/m³, melt flow rate 0.5-1.0 g/10 min at 190°C/2.16 kg, LDPE:LLDPE ratio 79:30). The core layer formed 60 % of the film, and the outer layers formed 20 % each. The film had a total density of 926 kg/m³.

### Film 3 (talc)

Film 3 had outer layers each containing 83 % of virgin LLDPE (density of 918 kg/m³), 15 % talc masterbatch (27 % LLDPE, 73 % talc with mean particle size d50 of 4.2 µm) (Kompuestos, Spain) and 1 % each of conventional processing aid and antiblock additives. The core layer contained 85 % of PCR-PE (density 925 kg/m³, melt flow rate 0.5-1.0 g/10 min at 190°C/2.16 kg, LDPE:LLDPE ratio 70:30). The core layer formed 60 % of the film, and the outer layers formed 20 % each. The film had a total density of 926 kg/m³.

### Film 4 (COC)

Film 4 had outer layers each containing 38 % of virgin LLDPE (density of 918 kg/m³), 60 % of cyclic olefin copolymer (Topas^{®} Cyclic Olefin Copolymers, Topas Advanced Polymers, Germany) and 1 % each of conventional processing aid and antiblock additives. The core layer contained 85 % of PCR-PE (density 925 kg/m³, melt flow rate 0.5-1.0 g/10 min at 190°C/2.16 kg, LDPE:LLDPE ratio 70:30). The core layer formed 60 % of the film, and the outer layers formed 20 % each. The film had a total density of 926 kg/m³.

### Film 5 (zeolite + mica)

Film 5 had a core layer identical to films 1-4, sandwiched by two outer layers each containing 89 % of virgin polyethylene (density of 927 kg/m³), 10 % of zeolite masterbatch containing 20 % Zeoflair (ZEOflair 350, ZEOCHEM), and 1 % antiblock. Film 5 also had two further outer layers arranged outside of the outer layers, in relation to the core layer, each comprising 83 % of virgin polyethylene (density of 927 kg/m³), 15 % of mica masterbatch containing 30 % mica particles (Mica N, Aspanger, Germany) and 1 % each of conventional processing aid and antiblock additives. The core layer formed 50 % of the film, the first and second outer layers formed 12.5 % each, and the further outer layers formed 12.5 % each. The film had a total density of 929 kg/m³.

### Film 6 (COC + talc)

Film 6 had a core layer identical to films 1-4, sandwiched by two outer layers each containing 29 % of virgin LLDPE (density of 919 kg/m³), 70 % of cyclic olefin copolymer (Topas^{®} Cyclic Olefin Copolymers, Topas Advanced Polymers, Germany), and 1 % antiblock. Film 6 also had two further outer layers arranged outside of the outer layers, in relation to the core layer, each comprising 83 % of virgin LLDPE (density of 919 kg/m³), 15 % of the same talc masterbatch as used in Film 3, and 1 % each of conventional processing aid and antiblock additives. The core layer formed 50 % of the film, the first and second outer layers formed 12.5 % each, and the further outer layers formed 12.5 % each. The film had a total density of 926 kg/m³.

### Migration tests

Three-layer test films were subjected to migration tests in accordance with EU 10/2011, Annex 3, with an exposure of 2-10 days at 20-60 °C. The test were performed by an accredited laboratory.

The tested films F, G, H, I J, K in accordance with embodiments of the invention had a thickness of 70 µm in total, with a layer distribution of 25% - 50% - 25% and a thickness of the different layers of 17.5 µm - 35 µm - 17.5 µm. The core layer of test films F, G and H contained PCR-PE having a high content of contaminants originating from print ("print"), and the test films I, J and K had a core layer containing virgin PE and high content of antioxidant additives ("AO"). The composition of the tested films F-K were as indicated below. The zeolite and mica materbatches were the same as used in example Films 1 and 2 above.

### Film F - COC (print)

First outer layer: 30 % virgin LLDPE, 70 % COC
Second outer layer: 30 % virgin LLDPE, 70 % COC
Core layer: 100 % PCR-PE

### Film G - Mica (print)

First outer layer: 80 % virgin LLDPE, 20 % mica MB
Second outer layer: 80 % virgin LLDPE, 20 % mica MB
Core layer: 100 % PCR-PE

### Film H - Zeolite (print)

First outer layer: 90 % virgin LLDPE, 10 % Zeolite MB
Second outer layer: 90 % virgin LLDPE, 10 % Zeolite MB
Core layer: 100 % PCR-PE

### Film I - COC (AO)

First outer layer: 30 % virgin LLDPE, 70 % COC
Second outer layer: 30 % virgin LLDPE, 70 % COC
Core layer: 80 % virgin LLDPE, 20 % Antioxidant

### Film J - Mica (AO)

First outer layer: 80 % virgin LLDPE, 20 % mica MB
Second outer layer: 80 % virgin LLDPE, 20 % mica MB
Core layer: 80 % virgin LLDPE, 20 % Antioxidant

### Film K - Zeolite (AO)

First outer layer: 90 % virgin LLDPE, 10 % zeolite MB
Second outer layer: 90 % virgin LLDPE, 10 % zeolite MB
Core layer: 80 % virgin LLDPE, 20 % Antioxidant

After migration into the food simulant, the simulants were analysed for specific migration non-intentionally added organic substances (NIAS) by gas chromatography-mass spectrometry (GC-MS) or by liquid chromatography-mass spectrometry (LC/MS-MS), the latter only applicable for primary aromatic amines. Samples were prepared for gas chromatography according to PN-EN 13130-1:2006 or EN 1186-13:2007 (only for the simulant MPPO). The GC analyses were non-targeted and semi-quantities analysis (DB-5 column, detector in EI mode). All substances detected above 10 ppb were identified based on NIST14 library with much factor MF>70%. Concentrations of identified substances were calculated based on average response of 4 internal standards. The LC/MS-MS analysis was a targeted analysis to detect all CMR primary aromatic amines, using UPLC-QQQ (triple quadrupole as detector).

Total migration (overall migration) was determined in accordance with PN-EN 1186-1:2005.

The results are presented in Tables 1-3 below. Table 1 and 2 show results from all test films F-K, whereas Table 3 shows result from test film F, H, I, J, and K.

Additionally, the films F-K were subjected to sensory analysis regarding odor and taste in accordance with DIN 10955:2004, and all of the films were found to be compliant.

**Table 1. Result of migration test using 50% EtOH, 10 days, 40 °C, expressed as percentage of prevented migration [%].**

| | **Test film F** | **Test film G** | **Test film H** | **Test film I** | **Test film J** | **Test film K** |
|---|---|---|---|---|---|---|
| 1-Propene-1,2,3-tricarboxylicacid, tri-butylester | 100 | 2 | 21 | Not detected | Not detected | Not detected |
| Hexadecanamide | 100 | 17 | 28 | Not detected | Not detected | Not detected |
| Tributylacetyl-citrate | 100 | 33 | 24 | Not detected | Not detected | Not detected |
| 9-Octadecenamid e | 100 | 10 | 18 | Not detected | Not detected | Not detected |
| Octadecanamid e | 100 | 10 | 20 | Not detected | Not detected | Not detected |
| Ethyl 13-docosenoate (ethylerucate) | 100 | 33 | 33 | Not detected | Not detected | Not detected |
| cis-11-Eicosenamide | 100 | 57 | 57 | Not detected | Not detected | Not detected |
| 13-Docosenamide | 100 | 16 | 20 | Not detected | Not detected | Not detected |
| Benzenepropan oic acid,3,5-bis(1,1-dimethylethyl)-4-hydroxy-,methyl-ester | Not detected | Not detected | Not detected | 100 | 38 | -62 |
| Tris(2,4-di-ter-butyl phenyl) phosphate | 100 | 33 | 38 | 100 | -17 | 33 |
| Benzene-propanoic acid,3,5-bis(1,1-dimethylethyl)-4-hydroxy-octadecylester | Not detected | Not detected | Not detected | 100 | -31 | 62 |

**Table 2. Result of migration test using isooctance, 2 days, 20 °C, expressed as percentage of prevented migration [%].**

| | **Test film F** | **Test film G** | **Test film H** | **Test film I** | **Test film J** | **Test film K** |
|---|---|---|---|---|---|---|
| 1-Octadecene | Not tested | Not detected | Not detected | 100 | 100 | 100 |
| Benzenepropanoic acid, 3,5-bis(1,1-dimethylethyl)-4-hydroxy-methyl-ester | Not detected | Not detected | Not detected | 20 | 30 | 30 |
| 1-Octadecanol | 0 | 0 | 100 | Not detected | Not detected | Not detected |
| Tributylacetyl-citrate | 4 | 12 | 20 | Not detected | Not detected | Not detected |
| Octadecanamide | 100 | 100 | 100 | Not detected | Not detected | Not detected |
| cis-11-Eicosenamide | 100 | 17 | 100 | Not detected | Not detected | Not detected |
| 13-Docosenamide | 8 | 7 | 14 | Not detected | Not detected | Not detected |
| 1-Heneicosanol | Not detected | Not detected | Not detected | 100 | 100 | 100 |
| Phenol,2,4-bis(1,1-dimethylethyl)-phosphite | -13 | -223 | -188 | 62 | -1 | 0 |
| Tris(2,4-di-tert-butylphenyl)-phosphate | 6 | 18 | 3 | 20 | -40 | -47 |
| Benzenepropanoicacid, 3,5-bis(1,1-dimethylethyl)-4-hydroxy-, octadecylester | -45 | 100 | -91 | 59 | 4 | -5 |

**Table 3. Result of migration test using MPPO, 10 days, 60 °C, expressed as percentage of prevented migration [%].**

| | **Test film F** | **Test film H** | **Test film I** | **Test film J** | **Test film K** |
|---|---|---|---|---|---|
| 1-Octadecanol | Not detected | Not detected | Not detected | Not detected | 60 |
| 7,9-Di-tert-butyl-1-oxaspiro-(4,5)deca-6,9-diene-2,8-dione | 20 | -20 | 100 | 100 | 100 |
| n-Hexa-decanoic-acid | Not detected | Not detected | 100 | 60 | 40 |
| Behenic Alcohol | | | 100 | 60 | 40 |
| Hydrocarbon | 100 | 100 | 40 | 100 | 100 |
| Tributylacetyl-citrate | 68 | 5 | Not detected | Not detected | Not detected |
| n-Nona-decanol-1 | Not detected | Not detected | 100 | 100 | 100 |
| Hydrocarbon | 100 | 100 | -200 | 100 | 100 |
| Behenic Alcohol | Not detected | Not detected | 100 | 60 | 40 |
| Hydrocarbon | Not detected | Not detected | 100 | 100 | 0 |
| n-Tetra-cosanol-1 | Not detected | Not detected | 100 | 50 | -25 |
| trans-13-Docosenamide | 100 | 0 | Not detected | Not detected | Not detected |
| cis-11-Eicosenamide | 33 | 0 | Not detected | Not detected | Not detected |
| Hydrocarbon | 100 | 100 | 100 | 100 | 100 |
| (Z)-13-Docosenamide | 74 | 56 | Not detected | Not detected | Not detected |
| Benzene-propanoic acid ,3,5-bis(1,1-dimethyl-ethyl)-4-hydroxy-, octa-decyl ester | Not detected | Not detected | 88 | -21 | -192 |

The results shown in Tables 1-3 indicates that the listed barrier additives prevent migration for a number of different migratory substances. The negative values represent an increase of the migratory substance. Negative values could be explained by the migratory substance in question being present also in the barrier additive.

Table 4-6 present the results for test films F and I are shown together with results for a relevant reference film. The reference films were three-layer films having outer layers of LDPE without any barrier additive and core layers corresponding to the test films F or I, respectively. The tests were performed with simulants: isooctane, MPPO, and EtOH 50 % aqueous solution, according to the following conditions:
- Isooctane - 2 days, 20 °C
- MPPO - 10 days, 60 °C
- 50% EtOH - 10 days, 40 °C

The results are shown in Tables 4-6 below, listed by migratory substance.

**Table 4. Simulant: 50% ethanol**

| CAS**#** | **Substance** | **SML**[mg/kg] (according to EU10/2011) | **Concentration migratory substance without additive [mg/kg]** | **Concentration migrating substance with COC additive [mg/kg]** | **Amount of substance stopped [%]** |
|---|---|---|---|---|---|
| 7568-58-3 | 1-Propene-1,2,3-tricarboxylic acid, tributyl ester | - | 0.47 | 0 | 100 |
| 629-54-9 | Hexadecanamide | - | 0.18 | 0 | 100 |
| 77-90-7 | Tributyl acetylcitrate | 60 | 0.49 | 0 | 100 |
| 301-02-0 | 9-Octadecenamide | - | 1.08 | 0 | 100 |
| 124-26-5 | Octadecanamide | - | 0.1 | 0 | 100 |
| 37910-77-3 | Ethyl 13-docosenoate(ethyl erucate) | - | 0.09 | 0 | 100 |
| 10436-08-5 | cis-11-Eicosenamide | - | 0.14 | 0 | 100 |
| 10436-08-5 | 13-Docosenamide | - | 1.57 | 0 | 100 |
| 6386-38-5 | Benzenepropanoic acid, 3,5-bis(1,1-dimethylethyl)-4-hydroxy-, methyl ester | 60 | 0.13 | 0 | 100 |
| 95906-11-9 | Tris(2,4-di-tert-butylphenyl) phosphate | 60 | 0.48 | 0 | 100 |
| 2082-79-3 | Benzenepropanoic acid, 3,5-bis(1,1-dimethylethyl)-4-hydroxy-octadecyl ester AO-1076 | 6 | 0.13 | 0 | 100 |

**Table 5. Simulant: MPPO**

| CAS**#** | **Substance** | **SML** [mg/kg] (according to EU10/2011) | **Concentration migrating substance without additive [mg/kg]** | **Concentration migrating substance with COC additive [mg/kg]** | **Amount of substance stopped [%]** |
|---|---|---|---|---|---|
| | Hydrocarbon | 60 | 0.02 | 0 | 100 |
| 36653-82-4 | 1-Hexadecanol | - | 0.03 | 0 | 100 |
| | Hydrocarbon | 60 | 0.01 | 0 | 100 |
| 112-92-5 | 1-Octadecanol | - | 0.05 | 0 | 100 |
| 82304-66-3 | 7,9-Di-tert-butyl-1-oxaspiro(4,5)deca-6,9-diene-2,8-dione | - | 0.03 | 0 | 100 |
| 1957-10-03 | n-Hexadecanoic acid | - | 0.13 | 0 | 100 |
| 661-19-8 | Behenic Alcohol | - | 0.05 | 0 | 100 |
| | Hydrocarbon | 60 | 0.05 | 0.03 | 40 |
| 1454-84-8 | n-Nonadecanol-1 | 60 | 0.01 | 0 | 100 |
| 661-19-8 | Behenic Alcohol | - | 0.05 | 0 | 100 |
| | Hydrocarbon | 60 | 0.03 | 0 | 100 |
| 506-51-4 | n-Tetracosanol-1 | - | 0.04 | 0 | 100 |
| | Hydrocarbon | 60 | 0.01 | 0 | 100 |
| 112-84-5 | 13-Docosenamide, (Z)- | - | 0.43 | 0.11 | 74 |
| 31570-04-4 | Phenol, 2,4-bis(1,1-dimethylethyl)-phosphite | 60 | 0.16 | 0.01 | 94 |
| 2082-79-3 | Benzenepropanoic acid, 3,5-bis(1,1-dimethylethyl)-4-hydroxy-octadecyl ester | 6 | 0.24 | 0.03 | 88 |

**Table 6. Simulant: Isooctane**

| CAS**#** | **Substance** | **SML** [mg/kg] (according to EU10/2011) | **Concentration migrating substance without additive** [mg/kg] | **Concentration migrating substance with COC additive [mg/kg]** | **Amount of substance stopped [%]** |
|---|---|---|---|---|---|
| 124-26-5 | Octadecanamide | - | 0.1 | 0 | 100 |
| 10436-08-5 | cis-11-Eicosenamide | - | 0.06 | 0 | 100 |
| 10436-08-5 | 13-Docosenamide | - | 1.43 | 1.32 | 8 |
| 15594-90-8 | 1-Heneicosanol | - | 0.05 | 0 | 100 |
| 31570-04-4 | Phenol, 2,4-bis(1,1-dimethylethyl)-phosphite | 60 | 6.27 | 2.41 | 62 |
| 95906-11-9 | Tris(2,4-di-tert-butylphenyl) phosphate | 60 | 0.15 | 0.12 | 20 |
| 2082-79-3 | Benzenepropanoic acid, 3,5-bis(1,1-dimethylethyl)-4-hydroxy-octadecyl ester | 6 | 2.57 | 1.06 | 59 |

As shown in Tables 4-6, COC provides a good barrier for a number of different migratory substances, in various environments.

The skilled person realizes that various modifications of the embodiments described herein are possible without departing from the scope of the disclosure, which is defined in the appended claims.

## Claims

1. A multilayer film (100, 200) comprising:
a core layer (103) arranged between a first outer layer (101) and a second outer layer (102), said core layer (103) comprising polyethylene (PE) and at least one migratory substance,
wherein said first outer layer (101) and said second outer layer (102) each comprises polyethylene (PE), and
wherein at least one of said first and second outer layers (101, 102), preferably both, comprises a barrier additive to prevent or reduce migration of said at least one migratory substance from said core layer (103).

2. The multilayer film according to claim 1, wherein said core layer (103) comprises recycled polyethylene, such as post-consumer recycled polyethylene (PCR-PE) and/or post-industrial recycled polyethylene (PIR-PE).

3. The multilayer film according to claim 2 or 3, wherein the content of PCR-PE, in said core layer (103), is in the range of 50-100 %, such as 60-80 % by weight based on the total weight of said core layer (103).

4. The multilayer film according to any one of the preceding claims, wherein said barrier additive is selected from the group consisting of mica, talc, cyclic olefin copolymer (COC), zeolite, and combinations thereof.

5. The multilayer film according to any one of the preceding claims, wherein the content of said barrier additive is in the range of 2-70 %, such as 5-70 %, such as 10-70 %, such as 10-60 %, such as 20-60 %, such as 15-20 % or 30-50 % by weight based on the weight of the first or second outer layer (101, 102), respectively, in which the barrier additive is present; or wherein the content of said barrier additive is in the range of 2-30 % such as 3-20 % or 4-10 % by weight based on the total weight of said multilayer film.

6. The multilayer film according to any one of the claims 2 to 5, wherein the ratio of LDPE to LLDPE in said PCR-PE is in the range of 50:50 to 90:10, such as from 60:40 to 80:20, such as about 70:30.

7. The multilayer film according to any one of the preceding claims, further comprising a third outer layer (106) located outside said first outer layer (101), and a fourth outer layer (107) located outside said second outer layer (102), such that said first outer layer (101) is sandwiched between said core layer (103) and said third outer layer (106), and said second outer layer (102) is sandwiched between said core layer (103) and said fourth outer layer (107).

8. The multilayer film according to claim 7, wherein at least one of said third and fourth outer layers comprises a second barrier additive to prevent or reduce migration of at least one migratory substance from said core layer, wherein said second barrier additive is selected from the group consisting of mica, talc, cyclic olefin copolymer (COC), zeolite, and combinations thereof, wherein said second barrier additive present in said at least one of the third and fourth outer layers is the same or different, preferably different, from the first barrier additive present in at least one of the first and second outer layers.

9. The multilayer film according to claim 8, wherein said first barrier additive is talc and said second barrier additive is cyclic olefin copolymer, or vice versa.

10. The multilayer film according to claim 8, wherein said first barrier additive is zeolite and said second barrier additive is mica, or vice versa.

11. The multilayer film according to claim 8, wherein one of said first and second barrier additives is COC.

12. The multilayer film according to any one of the preceding claims, wherein said at least one migratory substance comprises a substance selected from the list consisting of Phenol, 2,4-bis(1,1-dimethylethyl)-phosphite, Tris(2,4-di-tert-butylphenyl) phosphate, Benzenepropanoic acid, 3,5-bis(1,1-dimethylethyl)-4-hydroxy-octadecyl ester, 13-Docosenamide, (Z)-, and cis-11-Eicosenamide.

13. A laminated product (300) comprising a multilayer film (100, 200) according to any one of the preceding claims and a polyethylene base film (201).

14. A packaging comprising a multilayer film (100, 200) according to any one of the claims 1 to 12 or a laminated product (300) according to claim 13.

15. Use of a multilayer film (100, 200) according to any one of the claims 1 to 12 for food packaging.

16. Use of an additive for preventing migration of a migratory substance present in a packaging film, the film preferably comprising recycled polyethylene, wherein the additive is selected from mica, talc, cyclic olefin copolymer (COC), zeolite, and combinations thereof.

17. A method for manufacturing a multilayer film (100, 200) according to any one of the claims 1 to 12 comprising the steps of:
- extruding (S1) a first extrudable resin composition to form first outer layer (101);
- extruding (S2) a second extrudable resin to form second outer layer (102); and
- extruding (S3) a third extrudable resin composition comprising polyethylene (PE) and a at least one migratory substance to form a core layer (103), the third extrudable resin preferably comprising recycled polyethylene;
wherein at least one of said first and second extrudable resin compositions comprises a barrier additive, preferably selected from the group consisting of mica, talc, cyclic olefin copolymer (COC), zeolite, and combinations thereof, to prevent or reduce migration of said at least one migratory substance from the core layer (103);
wherein said first outer layer (101), said second outer layer (102) and said core layer (103) are coextruded, whereby a multilayer film (100) is formed with said core layer (103) arranged between said first outer layer (101) and said second outer layer (102).

18. The method according to claim 17, wherein the third extrudable composition comprises post-consumer recycled polyethylene material that has previously been incorporated into one or more products and collected and processed in a recycling process, preferably a mechanical recycling process.
